Europäisches Patentamt

(19) European Patent Office

Office européen des brevets

(11) Publication number: **0 047 081**
**B1**

## (12) EUROPEAN PATENT SPECIFICATION

(45) Date of publication of patent specification: 03.04.85

(21) Application number: 81303682.9

(22) Date of filing: 13.08.81

(51) Int. Cl.⁴: **C 08 G 18/69, H 01 B 7/28, H 01 B 13/22**

(54) Telecommunication cable filled with foamed polyurethane composition.

(30) Priority: 26.08.80 GB 8027565

(43) Date of publication of application:
10.03.82 Bulletin 82/10

(45) Publication of the grant of the patent:
03.04.85 Bulletin 85/14

(84) Designated Contracting States:
AT BE CH DE LI NL SE

(56) References cited:
EP-A-0 010 576
DE-A-1 669 986
DE-A-2 713 835
DE-A-2 728 642
DE-A-2 742 771
DE-A-2 835 677
DE-A-2 847 386
US-A-3 248 472
US-A-4 176 239

(73) Proprietor: International Standard Electric
Corporation
320 Park Avenue
New York New York 10022 (US)

(72) Inventor: Simpson, Walter Eric
6 Church Path Great Amwell
Ware Hertfordshire (GB)
Inventor: Bury, John Robert Ivor
10 The Paddocks
High Roding Essex (GB)

(74) Representative: Dennis, Mark Charles et al
STC Patent Department Edinburgh Way
Harlow Essex CM20 2SH (GB)

(56) References cited:
JOURNAL OF APPLIED POLYMER SCIENCE,
Vol. 22, 1978 Y. MINOURA et al. "Crosslinking
and Mechanical Property of Liquid Rubber. I.
Curative Effect of Aliphatic Diols" pages 1817 to
1844

## Description

This invention relates to water-blocking of telecommunications cables, i.e. protecting them against the longitudinal penetration of water as a result of damage to the cable sheath.

It is well known that water may penetrate through the locally damaged sheath of a telecommunications cable and then propagate further longitudinally through the cable core between the insulated conductors, thus adversely affecting the electrical properties of the cable. This longitudinal water infiltration can be stopped or locally restricted by filling the interstices between the insulated conductors either completely or at regular intervals with a water-blocking material. The first is generally referred to as solid filling and the latter as discrete blocking.

A material commonly used for water blocking of telecommunication cables is petroleum jelly which is relatively cheap but the use of this material introduces considerable problems in handling both at the filling stage and, later on, when the cable comes to be jointed. Other filling materials tend to be more expensive and do not show a substantial improvement in handling properties over petroleum jelly.

It has already been proposed to use a polyurethane composition in place of petroleum jelly but none of the polyurethane compounds so far used has the advantages of the present invention.

EP—A—0,010,576 for example describes polyurethane fillers for longitudinal sealing of cables. This material is intended for complete filling of the cable and is not suitable for discrete water blocking, i.e. for partial filling of the cable. When a submarine cable is installed a discrete blocking compound is required to withstand very large hydrostatic pressures. Whilst discrete blocking is preferred to maintain the flexibility of the cable the materials described cannot be relied upon to provide a vehicle seal under these extreme conditions.

According to the present invention there is provided a telecommunications cable having a core blocked against the longitudinal ingress of water by being wholly or partially filled with a foamed plastics composition, characterised in that the blocking composition comprises a flexible cured mixture of hydroxy-terminated butadiene, an additional diol serving as a chain extender, an isocyanate, and water in the proportions 100, 0 to 20, 5 to 20 and 0 to 2 parts by weight respectively, and that the blocking composition is heat expanded within the cable to fill the cable interstices thereby providing a pressure-tight seal.

In its preferred form, the composition comprises 100 parts by eight of hydroxy-terminated polybutadiene of approximate molecular weight 2800, approximately 5 parts by weight of 2-ethylhexane 1,3 diol, approximately 20 parts by weight of diphenylmethane diisocyanate and approximately 0.5 parts by weight of water.

Improved ageing properties can be obtained by adding approximately 1 part by weight of an antioxidant.

The composition can be used both for solid filling and discrete blocking. It is, however, particularly suited to the latter and a preferred method and apparatus for discrete water blocking, using the composition, will now be described.

The equipment comprises an applicator tube through which the cable core passes after being helically wrapped with an unwoven polyester tape (trade mark REEMAY) and before the application of the polyethylene sheath using a conventional sheath extruder and a conventional cooling trough. The applicator tube has a radially extending inlet port fed from a mixing chamber.

The blocking composition ingredients are supplied to the mixing chamber adjacent to the applicator tube through flexible tubes under the control of valves which are operated by compressed air.

A valve in the inlet port is under the control of length-measuring equipment near the final take-up stand following the cooling trough.

When the applicator valve is opened, the compound is forced by the pressure of the supply means to the mixing chamber through the REEMAY® tape to fill the interstices in the core. Between each blocking operation, some composition is smeared on to the tape as it passes through the tube.

The immediately following extrusion operation has two effects in that it accelerates the foaming and the curing (thermo-setting) of the blocking composition and also assists the smeared compound to impregnate the tape between the blocks thus preventing outward migration of the composition and providing a satisfactory base to receive the polyethylene extrusion.

The method and apparatus for discrete water blocking thus outlined is more fully described in EP—A1—0047341 (European Application No. 80200801.1), but it is to be understood that other methods of discrete water blocking can be used and that the composition is also suitable for solid filling.

At a later stage in the cable formation, an outer water blocking operation may be carried out using a conventional moisture barrier of plastics/metal foil laminate.

Subsequently, the cable can be armoured and it has been found that the composition according to the invention can be usefully applied to fill the interstices between the armouring wires.

## Claims

1. A telecommunications cable having a core blocked against the longitudinal ingress of water by being wholly or partially filled with a foamed plastics composition, characterised in that the blocking composition comprises a flexible cured mixture of hydroxy-terminated butadiene, an additional diol serving as a chain extender, an isocyanate, and water in the proportions 100, 0 to 20, 5 to 20 and 0 to 2 parts by weight respectively, and that the blocking composition is heat expanded within the cable to fill the cable interstices thereby providing a pressure-tight seal.

2. A telecommunications cable as claimed in claim 1, characterised in that the core is discretely blocked.

3. A telecommunications cable as claimed in claim 1 or 2, characterised in that it is provided with a moisture barrier comprising a metal/plastics laminate.

4. A telecommunications cable as claimed in any one of claims 1, 2 or 3, characterised in that the core is wrapped with an unwoven polyester tape through which the blocking composition is injected into the core and over which a polyethylene sheath is extruded.

5. A telecommunications cable as claimed in claim 1, 2, 3 or 4, characterised in that an armouring layer is provided, and that the interstices of the armouring layer is provided, and that the interstices of the armouring layer are filled with the blocking composition.

6. A telecommunications cable as claimed in any one of claims 1 to 4, characterised in that the blocking composition comprises 100 parts by weight of hydroxy-terminated butadiene of average molecular weight 2800, 5 parts by weight of 2-ethylhexane 1,3 diol, 20 parts by weight by diphenyl methane diisocyanate and 0.5 parts by weight of water.

### Revendications

1. Câble de télécommunications comprenant un noyau protégé contre la progression longitudinale de l'eau par un remplissage partiel ou total d'une mousse d'une matière plastique, caractérisé en ce que cette matière de remplissage consiste en un mélange élastique après traitement de butadiène à terminaison hydroxyle, d'un diol additionnel servant de prolongateur de chaîne, d'un isocyanate et d'eau dans des proportions respectives de 100, 0 à 20, 5 à 20 et 0 à 2 parties en poids, et en ce que cette matière de remplissage reçoit dans le câble un traitement par la chaleur augmentant son volume pour qu'elle remplisse les interstices du câble et fournisse un scellement étanche.

2. Câble de télécommunications tel que défini dans la revendication 1, caractérisé en ce que le noyau est protégé séparément.

3. Câble de télécommunications tel que défini dans l'une des revendications 1 et 2, caractérisé en ce qu'il comporte une barrière contre l'humidité comprenant une bande de métal ou de matière plastique.

4. Câble de télécommunications tel que défini dans l'une quelconque des revendications 1, 2 ou 3, caractérisé en ce que sur le noyau est enroulée une bande de polyester non tissée à travers laquelle la matière de remplissage est injectée dans le noyau et par-dessus laquelle est extrudée une gaine de polyéthylène.

5. Câble de télécommunications tel que défini dans l'une quelconque des revendications 1, 2, 3 ou 4, caractérisé en ce qu'une couche d'armure est prévue, dont les interstices sont remplis de la matière de remplissage.

6. Câble de télécommunications tel que défini dans l'une quelconque des revendications 1 à 4, caractérisé en ce que la matière de remplissage comprend, en poids, 100 parties de butadiène à terminaison hydroxyle d'un poids moléculaire moyen de 2800, 5 parties de 2-éthylhexane 1,3 diol, 20 parties de di-isocyanate de diphényl méthane et 0,5 parties d'eau.

### Patentansprüche

1. Nachrichtenkabel, dessen Seele ganz oder teilweise mit einer geschäumten Kunststoffzusammensetzung gefüllt ist, um in der Längsrichtung das Eindringen von Wasser zu blockieren, dadurch gekennzeichnet, daß die blockierende Zusammensetzung eine flexible, ausgehärtete Mischung aus mit einer Hydroxyl-Gruppe abgebrochenem Butadien, einem zusätzlichen Diol als Kettenverlängerer, einem Isozyanat, und Wasser im Verhältnis von 100:0 bis 20:5 bis 20:0 bis 2 Gewichtsteilen enthält, und daß die blockierende Zusammensetzung im Innern des Kabels durch Hitzeeinwirkung ausgedehnt wird, um die Hohlräume des Kabels auszufüllen und somit einen druckdichten Abschluß zu erzielen.

2. Nachrichtenkabel nach Anspruch 1, dadurch gekennzeichnet, daß die Kabelseele in bestimmten Abständen blockiert ist.

3. Nachrichtenkabel nach Anspruch 1 oder 2, dadurch gekennzeichnet, daß das Kabel mit einer ein Metall/Kunststofflaminat enthaltenden Feuchtigkeitsbarriere versehen ist.

4. Nachrichtenkabel nach einem der Ansprüche 1, 2 oder 3, dadurch gekennzeichnet, daß die Kabelseele mit einem ungewebten Polyesterband umwickelt ist, durch welches die blockierende Zusammensetzung in die Kabelseele eingespritzt wird, und über das ein Kabelmantel aus Polyäthylen extrudiert ist.

5. Nachrichtenkabel nach Anspruch 1, 2, 3 oder 4, dadurch gekennzeichnet, daß eine Bewehrungsschicht vorgesehen ist, und daß die Hohlräume der Bewehrungsschicht mit der blokkierenden Zusammensetzung ausgefüllt werden.

6. Nachrichtenkabel nach einem der Ansprüche 1 bis 4, dadurch gekennzeichnet, daß die blockierende Zusammensetzung 100 Gewichtsteile hydroxy-abgebrochenes Butadien mit einer mittleren relativen Molekülmasse von 2800 enthält, sowie 5 Gewichtsteile eines 2-Äthylhexan 1,3 Diols, 20 Gewichtsteile Diphenylmethan-Diiosozyanat und 0.5 Gewichtsteile Wasser.